(19) Europäisches Patentamt
European Patent Office
Office européen des brevets

(11) **EP 2 362 204 B1**

(12) **EUROPÄISCHE PATENTSCHRIFT**

(45) Veröffentlichungstag und Bekanntmachung des Hinweises auf die Patenterteilung:
**21.11.2012  Patentblatt 2012/47**

(51) Int Cl.:
***G01L 19/02*** *(2006.01)*

(21) Anmeldenummer: **11150128.4**

(22) Anmeldetag: **04.01.2011**

(54) **Druckmessaufnehmer und Differenzdruckmessaufnehmer mit Neigungswinkelkorrektur**

Pressure sensor device and differential pressure sensor with inclination angle correction

Enregistreur de mesure de pression et enregistreur de mesure de pression différentielle avec correction d'angle d'inclinaison

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.02.2010  DE 102010002157**

(43) Veröffentlichungstag der Anmeldung:
**31.08.2011  Patentblatt 2011/35**

(73) Patentinhaber: **Endress + Hauser GmbH + Co. KG 79689 Maulburg (DE)**

(72) Erfinder: **Philipps, Michael
79539, Lörrach (DE)**

(74) Vertreter: **Andres, Angelika Maria
Endress + Hauser (Deutschland) Holding GmbH, PatServe
Colmarer Strasse 6
79576 Weil am Rhein (DE)**

(56) Entgegenhaltungen:
**DE-A1- 10 319 417    US-A1- 2008 042 863**

**Beschreibung**

Die vorliegende Erfindung betrifft einen Druckmessaufnehmer und einen Differenzdruckmessaufnehmer, insbesondere Druckmessaufnehmer mit mindestens einem hydraulischen Pfad, und einen Druckmesswandler mit einem druckempfindlichen Verformungskörper, wobei der hydraulische Pfad einen Kanal umfasst, der sich durch einen Festkörper oder einen Festkörperverbund von einer Druckeingangsöffnung zumindest zu dem Verformungskörper erstreckt und mit einer Übertragungsflüssigkeit gefüllt ist, wobei die Druckeingangsöffnung von dem Verformungskörper um einen Abstandswert beabstandet ist, und wobei der an dem Verformungskörper anstehende Druck von dem an der Druckeingangsöffnung anstehenden Druck um die Differenz des hydrostatischen Drucks der Übertragungsflüssigkeit zwischen der Druckeingangsöffnung und dem Verformungskörper abweicht. Diese Differenz kann insbesondere bei Sensoren mit kleinen Messbereichen zu erheblichen relativen Messfehlern führen.

US 2008/042863 A1 offenbart einen Druckmessaufnehmer mit Neigungskorrektur, wobei die neigungsabhängige Höhe der Flüssigkeitssäule der Übertragungsflüssigkeit berücksichtigt wird, um die Differenz des hydrostatischen Drucks zu ermitteln.

Es ist die Aufgabe der vorliegenden Erfindung einen Druckmessaufnehmer oder Differenzdruckmessaufnehmer bereitzustellen, der diese Differenz des hydrostatischen Drucks genauererkennen und den Messwert entsprechend korrigieren kann.

Die Aufgabe wird erfindungsgemäß gelöst durch den Druckmessaufnehmer gemäß Patentanspruch 1 und den Differenzdruckmessaufnehmer gemäß Anspruch 11.

Der erfindungsgemäße Druckmessaufnehmer umfasst mindestens einen hydraulischen Pfad, und einen Druckmesswandler mit einem druckempfindlichen Verformungskörper, insbesondere einer druckempfindlichen Messmembran, wobei der hydraulische Pfad einen Kanal umfasst, der sich durch einen Festkörper oder einen Festkörperverbund von einer Druckeingangsöffnung zumindest bis zu einer Oberfläche des Verformungskörpers erstreckt und mit einer Übertragungsflüssigkeit gefüllt ist, wobei die Druckeingangsöffnung von dem Verformungskörper um einen Abstandswert beabstandet ist, und wobei der an der Oberfläche des Verformungskörpers anstehende Druck von dem an der Druckeingangsöffnung anstehenden Druck um die Differenz des hydrostatischen Drucks der Übertragungsflüssigkeit zwischen der Druckeingangsöffnung und dem Verformungskörper abweicht, mindestens einen Temperatursensor, einen Neigungssensor zum Bestimmen mindestens eines von der Neigung des hydraulischen Pfads abhängigen Neigungswerts und eine Verarbeitungsschaltung umfasst, wobei die Verarbeitungsschaltung erfindungsgemäß dazu ausgestaltet ist, anhand eines Temperaturmesswerts des mindestens einen Temperatursensors einen aktuellen Wert der Dichte der Übertragungsflüssigkeit zu bestimmen, und in Abhängigkeit von dem Neigungswert, und in Abhängigkeit von dem aktuellen Wert für die Dichte der Übertragungsflüssigkeit und einem den Abstandswert repräsentierenden Wert die Differenz des hydrostatischen Drucks der Übertragungsflüssigkeit zwischen der Druckeingangsöffnung und dem Verformungskörper zu bestimmen.

Der Druckmesswandler kann insbesondere in einer Wandlerkammer angeordnet sein, in welcher eine Druckausgangsöffnung des hydraulischen Pfads mündet, über welche der Verformungskörper mit dem hydraulischen Pfad kommuniziert.

Die Neigung des hydraulischen Pfades kann insbesondere der Winkel zwischen einer geraden Verbindungslinie zwischen der Druckeingangsöffnung und dem Verformungskörper einerseits und einer Referenz andererseits sein. Die Referenz ist beispielsweise eine horizontale Ebene oder einer vertikalen Achse. Bezüglich einer horizontalen Ebene variiert die Neigung zwischen +90° und -90°. Bezüglich einer vertikalen Achse kann die Neigung Werte zwischen 0° und 180°.

Der von der Neigung des hydraulischen Pfades abhängige Neigungswert kann insbesondere die Neigung des hydraulischen Pfades sein. Ggf. kann der Neigungswert um einen Kippwinkel gegenüber der Neigung des hydraulischen Pfads gekippt sein, so dass zur Bestimmung der tatsächlichen Neigung des hydraulischen Pfades, der Neigungswert um den Kippwinkel zu korrigieren ist.

Der den Abstandwert repräsentierende Wert kann einerseits der Abstandswert selbst sein, oder ein anderer Wert der von dem um nicht mehr als 16%, vorzugsweise nicht mehr als 8%, weiter bevorzugt nicht mehr als 4% und besonders bevorzugt nicht mehr als 2% abweicht.

In einer Weiterbildung der Erfindung ist die Verarbeitungsschaltung dazu ausgestaltet , den von dem Druckmesswandler erfassten Druck um die ermittelte Differenz des hydrostatischen Drucks zwischen der Öffnung und dem Verformungskörper zu korrigieren.

In einer Weiterbildung der Erfindung umfasst der Druckmessaufnehmer mindestens einen zweiten Temperatursensor zum Erfassen einer Temperatur an einer zweiten Position, die von einer Position des ersten Temperatursensors beabstandet ist, wobei die Verarbeitungsschaltung ausgestaltet ist, anhand eines Messwerts des ersten Temperatursensors und eines Temperaturmesswerts des zweiten Temperatursensors einen aktuellen Wert für eine mittlere Dichte der Übertragungsflüssigkeit zu bestimmen.

In einer anderen Weiterbildung der Erfindung umfasst der Temperatursensor ein Widerstandselement mit einem temperaturabhängigen Widerstand, wobei sich das Widerstandelement über mindestens 50%, insbesondere mindestens 75% und vorzugsweise mindestens 85% der Länge des hydraulischen Pfades zwischen der Öffnung und dem Verformungskörper entlang des hydraulischen Pfades erstreckt, so dass der Widerstandswert des Widerstandelement von dem Temperaturverlauf entlang des hydraulischen Pfades abhängt, wobei die Verarbeitungsschaltung geeignet ist, anhand eines Ausgangssignals des Temperatursensors einen aktuellen Wert für eine mittlere Dichte der Übertragungsflüssigkeit zu bestimmen.

In einer Weiterbildung der Erfindung umfasst der Druckmessaufnehmer mindestens eine Trennmembran welche entlang ihres Umfangs unter Bildung einer Druckkammer druckdicht mit der Oberfläche des Messwerkkörpers verbunden ist, wobei die Trennmembran die Druckeingangsöffnung überdeckt.

In einer Weiterbildung der Erfindung ist die Verarbeitungsschaltung dazu ausgestaltet, in Abhängigkeit eines Signals mindestens eines Temperatursensors einen temperaturabhängigen Trennmembranfehler aufgrund der Auslenkung der Trennmembran zu ermitteln, wobei der Trennmembranfehler eine Druckdifferenz zwischen dem an der Außenseite der Trennmembran anliegenden Druck und dem in der Druckkammer herrschenden Druck beschreibt.

Die Korrektur des vom Verformungskörper erfassten Drucks um die Differenz des hydrostatischen Drucks der Übertragungsflüssigkeit und ggf. des Trennmembranfehlers kann gleichzeitig mit der Kompensation von Temperaturabhängigkeiten und ggf. Lageabhängigkeiten eines Druckmesswandlers oder in einem oder mehreren nachgelagerten Korrekturschritt bzw. -schritten erfolgen.

In einer Weiterbildung der Erfindung ist der Neigungssensor dazu vorgesehen, die Neigung als Abweichung einer geraden Verbindungslinie zwischen der Druckeingangsöffnung und dem Verformungskörper von einer vertikalen Achse oder einer horizontalen Ebene ermittelt.

In einer Weiterbildung kann der Druckmessaufnehmer nach Anspruch einen Neigungssensor aufweisen, der ausgestaltet ist eine zweidimensionale oder eine dreidimensionale Lageerfassung durchzuführen. Eine zweidimensionale Lageerfassung kann beispielsweise erstens die Neigung des hydraulischen Pfads gegenüber einer vertikalen Achse und zweitens einen Rotationswinkel des Druckmessaufnehmers um eine weitere Achse beschreiben, beispielsweise um die durch den hydraulischen Pfad zwischen Druckeingangsöffnung und Verformungskörper definierte Achse. Eine dreidimensionale Lageerfassung kann beispielsweise zusätzlich noch eine Richtung der Projektion der Durch den hydraulischen Pfad beschriebenen Achse auf eine horizontale Ebene bestimmen.

In einer Weiterbildung der Erfindung speichert die Auswertungseinheit mindestens einen ersten Neigungsmesswert für die Neigung des Druckmessaufnehmers, insbesondere des hydraulischen Pfads, vergleicht aktuelle Neigungsmesswerte mit dem ersten Messwert, und gibt bei Veränderungen des Neigungsmesswerts ein Alarmsignal aus.

Ein erfindungsgemäßer Differenzdruckmessaufnehmer umfasst:

einen Druckmesswandler mit einer ersten Oberfläche eines druckempfindlichen Verformungskörpers, und einer zweiten zweiten Oberfläche eines druckempfindlichen Verformungskörpers;

einen ersten hydraulischen Pfad

wobei der erste hydraulische Pfad einen Kanal umfasst, der sich durch einen Festkörper oder einen Festkörperverbund von einer ersten Druckeingangsöffnung zumindest bis zu der ersten Oberfläche erstreckt und mit einer Übertragungsflüssigkeit gefüllt ist,

wobei die erste Druckeingangsöffnung von der ersten Oberfläche des Verformungskörpers um einen ersten Abstandswert beabstandet ist, einen zweiten hydraulischen Pfad ,

wobei der zweite hydraulische Pfad einen Kanal umfasst, der sich durch einen Festkörper oder einen Festkörperverbund von einer zweiten Druckeingangsöffnung zumindest bis zu der zweiten Oberfläche erstreckt und mit einer Übertragungsflüssigkeit gefüllt ist,

wobei die erste Druckeingangsöffnung von der ersten Oberfläche um einen ersten Abstandswert beabstandet ist, wobei der an der ersten Oberfläche anstehende Druck von dem an der ersten Druckeingangsöffnung anstehenden Druck um die Differenz des hydrostatischen Drucks der Übertragungsflüssigkeit zwischen der ersten Druckeingangsöffnung und der ersten Oberfläche abweicht;

wobei die zweite Druckeingangsöffnung von der zweiten Oberfläche um einen zweiten Abstandswert beabstandet ist, wobei der an der zweiten Oberfläche anstehende Druck von dem an der zweiten Druckeingangsöffnung anstehenden Druck um die Differenz des hydrostatischen Drucks der Übertragungsflüssigkeit zwischen der zweiten Druckeingangsöffnung und der zweiten Oberfläche abweicht;

wobei der Druckmessaufnehmer weiterhin eine erste Trennmembran aufweist, welche entlang ihres Umfangs unter Bildung einer ersten Druckkammer druckdicht mit der Oberfläche des Festkörpers oder Festkörperverbunds verbunden ist, wobei die erste Trennmembran die erste Druckeingangsöffnung überdeckt,

wobei der Druckmessaufnehmer weiterhin eine zweite Trennmembran aufweist, welche entlang ihres Umfangs unter Bildung einer zweiten Druckkammer druckdicht mit der Oberfläche des Festkörpers oder Festkörperverbunds verbunden ist, wobei die zweite Trennmembran die zweite Druckeingangsöffnung überdeckt,

wobei nahe der ersten Trennmembran ein erster Temperatursensor angeordnet ist, und wobei nahe der zweiten Trennmembran ein zweiter Temperatursensor angeordnet ist, um eine Temperatur des ersten bzw. zweiten hydraulischen Pfads zu erfassen, wobei die ermittelten Temperaturwerte zur Ermittlung der jeweiligen Dichte der Übertragungsflüssigkeit in den hydraulischen Pfaden herangezogen werden können,

wobei der Druckmessaufnehmer weiterhin einen Neigungssensor zum Bestimmen der Neigung des ersten hydraulischen Pfads und der Neigung des zweiten hydraulischen Pfads und

eine Verarbeitungsschaltung umfasst,

wobei die Verarbeitungsschaltung erfindungsgemäß dazu ausgestaltet ist, in Abhängigkeit von der Neigung des ersten hydraulischen Pfads, und der Neigung des zweiten hydraulischen Pfads in Abhängigkeit von dem jeweils ermittelten Wert für die Dichte der Übertragungsflüssigkeit sowie den ersten Abstandswert und den zweiten Abstandswert repräsentierenden Werten Differenzen des hydrostatischen Drucks der Übertragungsflüssigkeit zwischen der ersten Druckeingangsöffnung und der ersten Oberfläche sowie zwischen der zweiten Druckeingangsöffnung und der Zweiten Oberfläche und/ oder eine Differenz des hydrostatischen Drucks der Übertragungsflüssigkeit zwischen der ersten Druckeingangsöffnung und der zweiten Druckeingangsöffnung zu bestimmen.

Gemäß einer ersten Weiterbildung der Erfindung umfasst der Differenzdruckmessaufnehmer einen Druckmesswandler mit einer Messmembran, wobei die erste Oberfläche auf einer ersten Seite der Messmembran angeordnet ist, und wobei die zweite Oberfläche auf einer zweiten Seite der Messmembran, welche der ersten Seite gegenüberliegt, angeordnet ist.

Gemäß einer ersten Weiterbildung der Erfindung umfasst der Differenzdruckmessaufnehmer einen Druckmesswandler mit einer Messmembran und einer zweiten Messmembran, wobei die erste Messmembran die erste Oberfläche aufweist und die zweite Messmembran die zweite Oberfläche aufweist, und wobei die erste und die zweite Messmembran über einen Stößel oder ein Kopplungsmedium gekoppelt sind, so dass eine Druckbeaufschlagung der ersten Oberfläche einer Druckbeaufschlagung der zweiten Oberfläche entgegenwirkt.

Die Erfindung wird nun anhand eines in den Figuren dargestellten Ausführungsbeispiels erläutert. Es zeigt:

Figur 1:    einen Längsschnitt durch einen erfindungsgemäßen Druckmessaufnehmer;

Figur 2:    die temperaturabhängige Summe aus dem Trennmembranfehler und der Differenz des hydrostatischen Drucks der Übertragungsflüssigkeit für verschiedene Einbaulagen eines erfindungsgemäßen Druckmessaufnehmers;

Figur 3:    den temperaturabhängigen relativen Messfehler eines erfindungsgemäßen Druckmessaufnehmers mit einem Messbereich von 10 Millibar für verschiedene Neigungen; und

Figur 4:    einen Längsschnitt durch einen erfindungsgemäßen Differenzdruckmessaufnehmer.

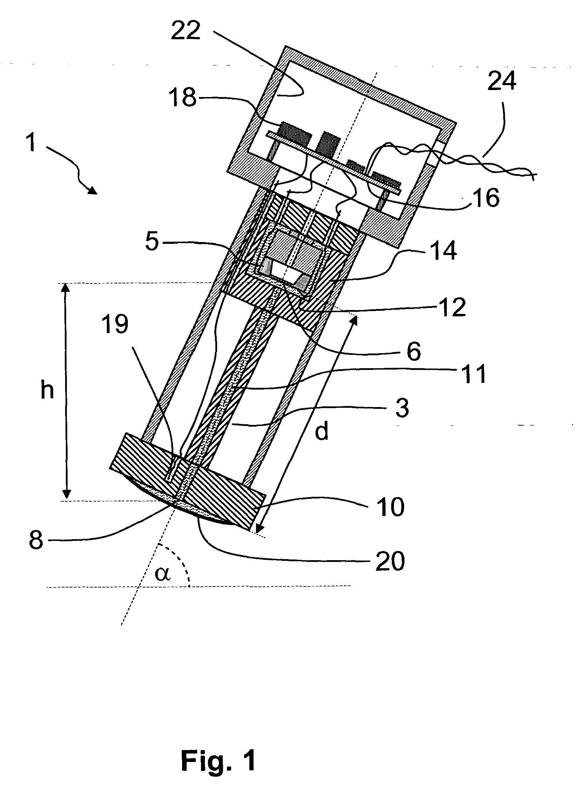

Der in Figur 1 gezeigte Druckmessaufnehmer 1 umfasst einen hydraulischen Pfad 3, der sich zu einer Druckmesszelle 5 erstreckt, um die als Verformungskörper dienende Messmembran 6 mit einem Druck zu beaufschlagen, wobei sich der hydraulische Pfad 3 von einer Druckeinlassöffnung 8 in einem Prozessanschlusskörper 10 über eine Kapillarleitung 11 in eine Druckmesswandlerkammer 12 erstreckt, die in einem Druckmesswandlergehäuse 14 ausgebildet ist.

Das Druckmesswandlergehäuse 14, der Prozessanschlusskörper 10 und die Kapillarleitung 11 weisen vorzugsweise Edelstahl auf, wobei der Druckmesswandler 5 im Ausführungsbeispiel ein Halbleiterdruckmesswandler ist, welcher piezo-resistive Elemente in seiner Messmembran 6 aufweist, die in einer Vollbrückenschaltung beschaltet sind. Der Druckmessaufnehmer umfasst weiterhin eine Auswertungsschaltung 16, welche an den Druckmesswandler 5 angeschlossen ist, wobei die Auswertungsschaltung weiterhin einen Neigungssensor 18 aufweist, welcher dazu geeignet

ist, den Leitungswinkel $\alpha$ an der Längsachse des Druckmessaufnehmers gegenüber einer horizontalen Eben zu ermitteln. Aus dem Neigungswinkel $\alpha$ und einem in der Auswertungsschaltung gespeicherten Wert für den Abstand d zwischen der Trennmembran 6 und der Druckeinlassöffnung 8 folgt für den Höhenunterschied h zwischen der Messmembran 6 und der Druckeinlassöffnung 8

$$h = d * \sin(\alpha).$$

Um den hydrostatischen Druckunterschied zwischen der Druckeingangsöffnung 8 und der Messmembran 6 zu ermitteln, ist der ermittelte Höhenwert noch mit der aktuellen Dichte der Übertragungsflüssigkeit in dem hydraulischen Pfad 3 zu multiplizieren. Die Dichte weist aufgrund der Wärmeausdehnung der Übertragungsflüssigkeit eine starke Temperaturabhängigkeit auf, sodass zur Bestimmung der Dichte eine Temperaturmessung erforderlich ist. Zu diesem Zweck weist der erfindungsgemäße Druckmessaufnehmer einen ersten Temperatursensor 19 auf, welcher in einer Sacklochbohrung in dem Prozessanschlusskörper 10 nahe der Eingangsöffnung 8 des hydraulischen Pfads angeordnet und an die Auswertungsschaltung 16 angeschlossen ist. Neben dem ersten Temperaturmesswert $T_1$ des ersten Temperatursensors ist ein zweiter Temperaturmesswert $T_2$ für die Übertragungsflüssigkeit mittels eines Temperatursensors zu bestimmen, der nahe der Druckmesszelle angeordnet oder in die Druckmesszelle integriert ist. Beim vorliegenden Ausführungsbeispiel dient die Vollbrückenschaltung der Messmembran als zweiter Temperatursensor, wobei dessen Temperaturmesswert aus dem Längswiderstandswert der Vollbrückenschaltung der Messmembran 6 gewonnen wird.

Ein (ggf. gewichteter) Mittelwert T des ersten Temperaturmesswerts $T_1$ und des zweiten Temperaturmesswerts $T_2$ mit

$$T = a * T_1 + (1-a) * T_2 \, ,$$

wobei $0 < a < 1$, insbesondere $0{,}25 < a < 0{,}75$, beispielsweise $a = 0{,}5$ wird zur Berechnung der aktuellen Dichte der Übertragungsflüssigkeit gemäß der Gleichung

$$\rho(T) = \rho(T_0) / [1 + \gamma * (T - T_0)]$$

verwendet. Wobei $\rho(T_0)$ die Dichte bei einer Referenztemperatur $T_0$, insbesondere Raumtemperatur ist, und wobei $\gamma$ der Volumenausdehnungskoeffizient der Übertragungsflüssigkeit ist.

Die Differenz des hydrostatischen Drucks $\Delta p$ zwischen der Druckeingangsöffnung 8 und der Messmembran 6 ergibt sich dann durch die folgende Gleichung:

$$\begin{aligned}
\Delta p \quad &= \rho(T) * g * h \\
&= \rho(T_0) / [1 + \gamma * (T - T_0)] * g * d * \sin(\alpha).
\end{aligned}$$

Der Druckmessaufnehmer weist weiterhin eine Trennmembran 20 auf, welche entlang eines umlaufenden Randes an der Stirnfläche des Prozessanschlusskörpers 10 befestigt ist, und welche die Druckeinlassöffnung 8 überdeckt. Die Trennmembran 20 ist hinreichend flexibel, um die Volumenschwankungen der Übertragungsflüssigkeit aufgrund der Wärmeausdehnung derselben aufzunehmen, aber dennoch geht damit ein Trennmembranfehler in der Größenordnung von etwa 0,1 mbar/$\mu$l einher.

Auch zur Kompensation dieses Fehlers kann ein Temperaturmittelwert herangezogen werden, wobei an Stelle des oben definierten Temperaturmittelwerts auch ein anders gewichteter Mittelwert $T_m$ angesetzt werden kann, welcher beispielsweise das Volumen der Übertragungsflüssigkeit in der Druckmesswandlerkammer 12 im Verhältnis zum Volumen der Übertragungsflüssigkeit unter der Trennmembran berücksichtigt.

$$T_m = b * T_1 + (1-b) * T_2$$

Gegebenenfalls weist der Koeffizient b selbst eine Temperaturabhängigkeit auf, um die veränderlichen Volumenanteile unter der Trennmembran zu berücksichtigen, beispielsweise

$$b = b_0 / [1 + \gamma * (T_1 - T_0)].$$

Der Trennmembranfehler $\Delta p_m$ kann dann beispielsweise durch die folgende Gleichung abgeschätzt werden:

$$\Delta p_m = A_0 + A_1 * (T_m - T_0) + A_3 * (T_m - T_0)^3,$$

wobei die $A_i$ beispielsweise empirisch zu ermittelnde Koeffizienten sind.

Die Auswertungsschaltung 16 kompensiert nun erstens Temperaturabhängigkeiten der Druckmesswandler selbst, zweitens ermittelt sie die temperaturabhängige, hydrostatische Druckdifferenz zwischen der Druckeingangsöffnung 8 und der Messmembran 6 unter Berücksichtigung der Neigung der Achse des Druckmessaufnehmers und drittens bestimmt sie den Trennmembranfehler aufgrund der temperaturabhängigen Volumenausdehnung der Übertragungsflüssigkeit, welche eine elastische Verformung der Trennmembran bewirkt. Das beispielsweise über eine Stromschleife 24 ausgegebene Messsignal repräsentiert schließlich den um die genannten Fehler bereinigten Druck, welcher an der Trennmembran 20 ansteht.

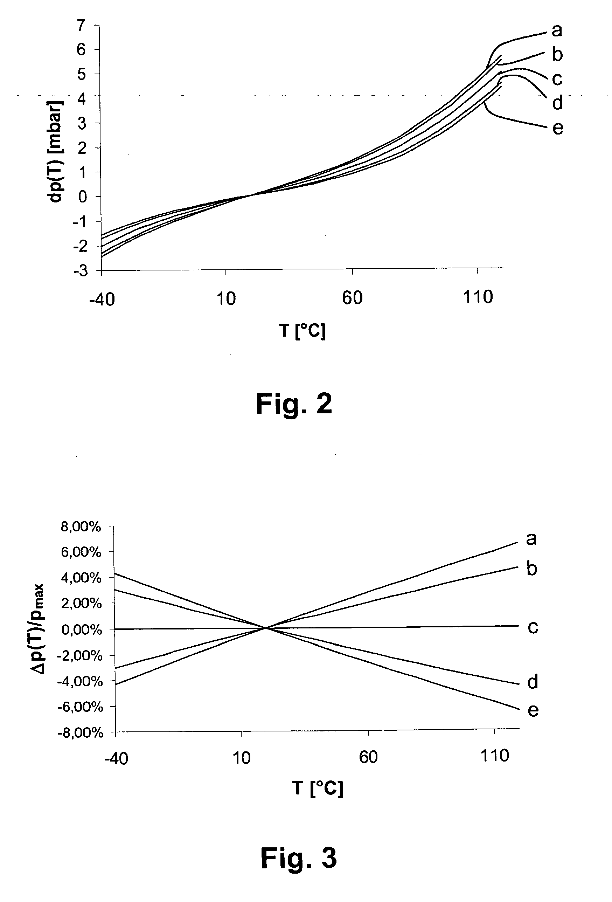

Die Figuren 2 und 3 illustrieren nun die temperaturabhängigen Messfehler, die unter Berücksichtigung der Lage durch die Auswertungsschaltung zu korrigieren sind. Hierbei zeigen die Kurven jeweils Daten für die folgenden Neigungswinkel: a: $\alpha = -90°$, b: $\alpha = -45°$, c: $\alpha = 0°$, d: $\alpha = 45°$, e: $\alpha = 90°$.

Der globale Verlauf des kumulierten temperaturabhängigen Druckfehlers aufgrund der hydrostatischen Druckdifferenz und des Trennmembranfehlers ist in Figur 2 dargestellt, wobei der globale Verlauf der Kurvenschar in Figur 2 durch die elastische Verformung der Trennmembran aufgrund der Wärmeausdehnung der Übertragungsflüssigkeit dominiert ist. Bei dem hier betrachteten Druckmessaufnehmer weist der Wert d für den Abstand zwischen der Messmembran, bzw. dem Verformungskörper und der Druckeingangsöffnung einen Wert von 30 cm auf. Dies führt unter Berücksichtigung des Neigungswinkels des Druckmessaufnehmers zu der dargestellten Spreizung der Kurven. Unterstellt man nun, dass für den Druckmessaufnehmer der Trennmembranfehler bei einem Neigungswinkel von 0 Grad bestimmt worden ist, sodass der Trennmembranfehler temperaturabhängig korrigiert werden kann, so würde beispielsweise bei einem Druckmessaufnehmer mit einem Messbereich von 10 mbar noch der in Figur 3 dargestellte neigungsabhängige Messfehler $\Delta p$ verbleiben, nachdem der Druckmessaufnehmer bei der Montage vor Ort einen Nullpunktabgleich bei Raumtemperatur erfahren hat. Die Ursache dieses verbleibenden Fehlers sind die temperaturabhängigen Schwankungen der Differenz des hydrostatischen Drucks zwischen der Druckeingangsöffnung und der Messmembran, deren Ausmaß und Vorzeichen von Betrag und Richtung der Neigung des Druckmessaufnehmers abhängig ist. Der erfindungsgemäße Druckmessaufnehmer ermöglicht nun die Korrektur auch dieses Fehlers. Die Darstellung des Druckmessaufnehmers in Figur 1 ist selbstverständlich nicht maßstabsgetreu. So ist beispielsweise der tatsächliche Abstand zwischen der Druckeingangsöffnung und der prozessberührenden Seite der Trennmembran 20 im Verhältnis zur Länge des Abstandes d zwischen der Druckeingangsöffnung und dem Verformungskörper bzw. der Messmembran zu groß dargestellt. Gleichermaßen ist der Abstand zwischen der Stirnseite der Messmembran und der Mündung der Kapillarleitung in die Druckmesswandlerkammer im Verhältnis zum Maß d zu groß dargestellt.

Dies bedeutet, dass anstelle des Maßes d zwischen der Druckeingangsöffnung und der Messmembran bzw. dem Verformungskörper auch andere Maße verwandt werden können, beispielsweise der Abstand zwischen der Stirnseite der Trennmembran und dem Verformungskörper oder der Abstand zwischen der Trennmembran bzw. der Druckeinlassöffnung und der verformungskörperseitigen Innenwand der Druckmesswandlerkammer. Solange ein solches Maß geeignet ist, als Basis zur Bestimmung der Höhe h zur Ermittlung der Differenz des hydrostatischen Drucks über den hydraulischen Pfad mit hinreichender Genauigkeit zu dienen, ist es im Sinne der Erfindung als gleichwirkend zu betrachten. Als hinreichend genau wird insbesondere eine Stimmung der Höhe h mit einer Abweichung von plusminus 10% vorzugsweise bis auf plusminus 5%, weiter bevorzugt bis auf plusminus 2%, und insbesondere bis auf plusminus 1% angesehen.

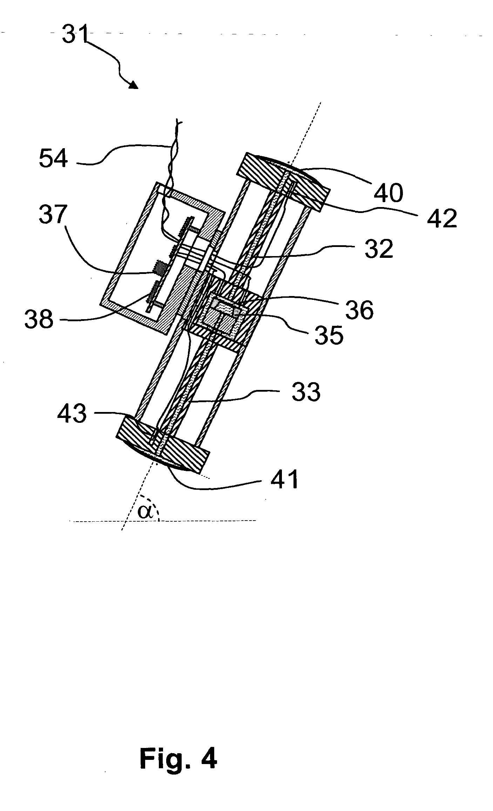

Der in Fig. 4 gezeigte Differenzdruckmessaufnehmer 31 umfasst einen ersten hydraulischen Pfad 32 und einen zweiten hydraulischen Pfad 33 sowie einen Druckmesswandler 35 mit einer Messmembran 36, wobei sich der erste hydraulische Pfad 32 von einer ersten Druckeingangsöffnung zu einer ersten Seite der Messmembran 36 erstreckt und der zweite hydraulische Pfad 33 sich von einer zweiten Druckeingangsöffnung zu der zweiten Seite der Messmembran 36 erstreckt. Die erste Druckeingangsöffnung ist von einer ersten Trennmembran 40 überdeckt, de mit einem ersten Druck beaufschlagbar ist, und die zweite Druckeingangsöffnung ist von einer zweiten Trennmembran 41 überdeckt, die mit einem zweiten Druck beaufschlagbar ist. Nahe der ersten Trennmembran ist ein erster Temperatursensor 42 angeordnet und nahe der zweiten Trennmembran ist ein zweiter Temperatursensor 43 angeordnet um eine Temperatur des ersten bzw. zweiten hydraulischen Pfads zu erfassen, wobei die ermittelten Temperaturwerte zur Ermittlung der jeweiligen Dichte der Übertragungsflüssigkeit in den hydraulischen Pfaden herangezogen werden können. Außerdem folgt aus den Temperaturwerten eine jeweilige Volumenausdehnung für die hydraulischen Pfade, woraus ein erster und ein zweiter Trennmembranfehler folgt. Der Differenzdruckmessaufnehmer umfasst weiterhin eine Auswertungsschaltung 37, welche an den Druckmesswandler 35 und die beiden Temperatursensoren 42, 43 angeschlossen ist, um ein aufbereitetes Differenzdrucksignal an einem Ausgang 54 bereitzustellen, welches zumindest bezüglich der Internen Fehler des Differenzdruckmessaufnehmers kompensiert ist. Die Auswertungsschaltung umfasst dazu einen Neigungssensor 38, um in Abhängigkeit von der Neigung des Differenzdruckmessaufnehmers und der jeweiligen Dichte der Übertragungsflüssigkeit, die jeweilige Differenz des hydrostatischen Drucks zwischen einer Druckeingangsöffnung und der Messmembran bzw. zwischen der ersten und der zweiten Druckeingangsöffnung zu bestimmen. Selbstverständlich können auch die Trennmembranfehler aufgrund der Wärmeausdehnung der Übertragungsflüssigkeit in den jeweiligen hydraulischen Pfaden anhand der Temperaturmesswerte bestimmt und zur Korrektur des Ausgangssignals berücksichtigt werden.

Das Ausgangssignal des Differenzdruckmessaufnehmers kann im Ergebnis die Differenz zwischen einem Druck an der ersten Trennmembran und einem Druck an der zweiten Trennmembran ausgeben.

**Patentansprüche**

1. Druckmessaufnehmer (1), umfassend:

   einen hydraulischen Pfad (3), und einen Druckmesswandler (5) mit einem druckempfindlichen Verformungskörper (6),
   wobei der hydraulische Pfad (3) einen Kanal umfasst, der sich durch einen Festkörper oder einen Festkörperverbund (10,11,14) von einer Druckeingangsöffnung (8) zumindest bis zu einer Oberfläche des Verformungskörpers (6) erstreckt und mit einer Übertragungsflüssigkeit gefüllt ist,
   wobei die Druckeingangsöffnung (8) von dem Verformungskörper (6) um einen Abstandswert (d) beabstandet ist, und wobei der an der Oberfläche des Verformungskörpers (6) anstehende Druck von dem an der Druckeingangsöffnung anstehenden Druck um die Differenz des hydrostatischen Drucks der Übertragungsflüssigkeit zwischen der Druckeingangsöffnung und dem Verformungskörper abweicht;
   mindestens einen Temperatursensor;
   einen Neigungssensor (18) zum Bestimmen der Neigung des hydraulischen Pfads (3); und
   eine Verarbeitungsschaltung (16);
   **dadurch gekennzeichnet,**
   **dass** die Verarbeitungsschaltung (16) dazu ausgestaltet ist, anhand eines aktuellen Temperaturmesswertes des mindestens einen Temperatursensors einen aktuellen Wert der Dichte der Übertragungsflüssigkeit zu bestimmen, und
   in Abhängigkeit von der Neigung des hydraulischen Pfads, und in Abhängigkeit von dem aktuellen Wert für die Dichte der Übertragungsflüssigkeit und einem den Abstandswert repräsentierenden Wert die Differenz des hydrostatischen Drucks der Übertragungsflüssigkeit zwischen der Druckeingangsöffnung und dem Verformungskörper zu bestimmen.

2. Druckmessaufnehmer nach Anspruch 1, wobei die Verarbeitungsschaltung dazu ausgestaltet ist, den von dem Druckmesswandler erfassten Druck um die ermittelte Differenz des hydrostatischen Drucks zwischen der Öffnung und der Oberfläche des Verformungskörpers zu korrigieren.

3. Druckmessaufnehmer nach Anspruch 1, welcher mindestens einen zweiten Temperatursensor aufweist zum Erfassen einer Temperatur an einer zweiten Position, die von einer Position des ersten Temperatursensors beabstandet ist, und wobei die Verarbeitungsschaltung ausgestaltet ist, anhand eines Messwerts des ersten Temperatursensors und eines Temperaturmesswerts des zweiten Temperatursensors einen aktuellen Wert für eine mittlere Dichte der Übertragungsflüssigkeit zu bestimmen.

4. Druckmessaufnehmer nach Anspruch 1, wobei der Temperatursensor ein Widerstandselement mit einem temperaturabhängigen Widerstand aufweist, und wobei sich das Widerstandselement über mindestens 50%, insbesondere mindestens 75% und vorzugsweise mindestens 85% der Länge des hydraulischen Pfades zwischen der Öffnung und dem Verformungskörper entlang des hydraulischen Pfades erstreckt, so dass der Widerstandswert des Widerstandselements von dem Temperaturverlauf entlang des hydraulischen Pfades abhängt, wobei die Verarbeitungsschaltung ausgestaltet ist, anhand eines Ausgangssignals des Temperatursensors einen aktuellen Wert für eine mittlere Dichte der Übertragungsflüssigkeit zu bestimmen.

5. Druckmessaufnehmer nach einem der vorhergehenden Ansprüche, weiterhin umfassend mindestens eine Trennmembran welche entlang ihres Umfangs unter Bildung einer Druckkammer druckdicht mit der Oberfläche des Festkörpers verbunden ist, wobei die Trennmembran die Druckeingangsöffnung überdeckt.

6. Druckmessaufnehmer nach einem der Ansprüche 1 bis 5, wobei die Verarbeitungsschaltung dazu ausgestaltet ist, in Abhängigkeit eines Signals mindestens eines Temperatursensors einen temperaturabhängigen Trennmembranfehler aufgrund der Auslenkung der Trennmembran zu ermitteln, wobei der Trennmembranfehler eine Druckdifferenz zwischen dem an der Außenseite der Trennmembran anliegenden Druck und dem in der Druckkammer herrschenden Druck beschreibt.

7. Druckmessaufnehmer nach einem der vorhergehenden Ansprüche, wobei der Neigungssensor dazu vorgesehen ist, die Neigung als Abweichung einer geraden Verbindungslinie zwischen der Druckeingangsöffnung und der Oberfläche des Verformungskörpers von einer vertikalen Achse oder einer horizontalen Ebene ermittelt.

8. Druckmessaufnehmer nach Anspruch 7, wobei der Neigungssensor eine zweidimensionale oder eine dreidimensionale Lageerfassung durchführt.

9. Druckmessaufnehmer nach einem der vorhergehenden Ansprüche, wobei die Auswertungseinheit einen erste Neigungsmesswert für die Neigung des Druckmessaufnehmers speichert, aktuelle Neigungsmesswerte mit dem ersten Messwert vergleicht, und bei Veränderungen des Neigungsmesswerts ein Alarmsignal ausgibt.

10. Druckmessaufnehmer nach einem der vorhergehenden Ansprüche, wobei der Druckmessaufnehmer ein Absolutdruckmessaufnehmer oder ein Relativdruckmessaufnehmer ist.

11. Differenzdruckmessaufnehmer (31), umfassend :

einen Druckmesswandler (35) mit einer ersten Oberfläche eines druckempfindlichen Verformungskörpers (36), bund einer zweiten Oberfläche eines druckempfindlichen Verformungskörpers;
einen ersten hydraulischen Pfad (32),
wobei der erste hydraulische Pfad einen Kanal umfasst, der sich durch einen Festkörper oder einen Festkörperverbund von einer ersten Druckeingangsöffnung zumindest bis zu der ersten Oberfläche erstreckt und mit einer Übertragungsflüssigkeit gefüllt ist,
wobei die erste Druckeingangsöffnung von der ersten Oberfläche des Verformungskörpers um einen ersten Abstandswert beabstandet ist,
einen zweiten hydraulischen Pfad (33),
wobei der zweite hydraulische Pfad einen Kanal umfasst, der sich durch einen Festkörper oder einen Festkörperverbund von einer zweiten Druckeingangsöffnung zumindest bis zu der zweiten Oberfläche des Verformungskörpers erstreckt und mit einer Übertragungsflüssigkeit gefüllt ist,
wobei die erste Druckeingangsöffnung von der ersten Oberfläche um einen ersten Abstandswert beabstandet ist, wobei der an der ersten Oberfläche anstehende Druck von dem an der ersten Druckeingangsöffnung anstehenden Druck um die Differenz des hydrostatischen Drucks der Übertragungsflüssigkeit zwischen der ersten Druckeingangsöffnung und der ersten Oberfläche abweicht;
wobei die zweite Druckeingangsöffnung von der zweiten Oberfläche um einen zweiten Abstandswert beabstandet ist, wobei der an der zweiten Oberfläche anstehende Druck von dem an der zweiten Druckeingangsöffnung anstehenden Druck um die Differenz des hydrostatischen Drucks der Übertragungsflüssigkeit zwischen der zweiten Druckeingangsöffnung und der zweiten Oberfläche abweicht;
wobei der Druckmessaufnehmer weiterhin eine erste Trennmembran (40) aufweist, welche entlang ihres Umfangs unter Bildung einer ersten Druckkammer druckdicht mit der Oberfläche des Festkörpers oder Festkörperverbunds verbunden ist, wobei die erste Trennmembran die erste Druckeingangsöffnung überdeckt,
wobei der Druckmessaufnehmer weiterhin eine zweite Trennmembran (41) aufweist, welche entlang ihres Umfangs unter Bildung einer zweiten Druckkammer druckdicht mit der Oberfläche des Festkörpers oder Festkörperverbunds verbunden ist, wobei die zweite Trennmembran die zweite Druckeingangsöffnung überdeckt,
wobei nahe der ersten Trennmembran ein erster Temperatursensor (42) angeordnet ist, und wobei nahe der zweiten Trennmembran ein zweiter Temperatursensor (43) angeordnet ist, um eine Temperatur des ersten bzw. zweiten hydraulischen Pfads zu erfassen, wobei die ermittelten Temperaturwerte zur Ermittlung der jeweiligen Dichte der Übertragungsflüssigkeit in den hydraulischen Pfaden herangezogen werden können, wobei der Druckmessaufnehmer weiterhin einen Neigungssensor zum Bestimmen der Neigung des ersten hydraulischen Pfads und der Neigung des zweiten hydraulischen Pfads und eine Verarbeitungsschaltung umfasst, **dadurch gekennzeichnet, dass** die Verarbeitungsschaltung dazu ausgestaltet ist, in Abhängigkeit von der Neigung des ersten hydraulischen Pfads, und der Neigung des zweiten hydraulischen Pfads in Abhängigkeit von dem jeweils ermittelten Wert für die Dichte der Übertragungsflüssigkeit sowie den ersten Abstandswert und den zweiten Abstandswert repräsentierenden Werten Differenzen des hydrostatischen Drucks der Übertragungsflüssigkeit zwischen der ersten Druckeingangsöffnung und der ersten Oberfläche sowie zwischen der zweiten Druckeingangsöffnung und der zweiten Oberfläche und/oder eine Differenz des hydrostatischen Drucks der - Übertragungsflüssigkeit zwischen der ersten Druckeingangsöffnung und der zweiten Druckeingangsöffnung zu bestimmen.

**12.** Differenzdruckmessaufnehmer nach Anspruch 11, wobei der Druckmesswandler eine Messmembran aufweist, wobei die erste Oberfläche auf einer ersten Seite der Messmembran angeordnet ist, und wobei die zweite Oberfläche auf einer zweiten Seite der Messmembran, welche der ersten Seite gegenüberliegt, angeordnet ist.

**13.** Differenzdruckmessaufnehmer nach Anspruch 11, wobei der Druckmesswandler eine erste Messmembran und eine zweite aufweist, wobei die erste Messmembran die erste Oberfläche aufweist und die zweite Messmembran die zweite Oberfläche aufweist, und wobei die erste und die zweite Messmembran über einen Stößel oder ein Kopplungsmedium gekoppelt sind, so dass eie Druckbeaufschlagung der ersten Oberfläche einer Druckbeaufschlagung der zweiten Oberfläche entgegenwirkt.

## Claims

**1.** Pressure sensor (1), comprising:

a hydraulic path (3) and a pressure transducer (5) with a deformation element (6) that is sensitive to pressure, wherein the hydraulic path (3) comprises a channel which extends through a solid body or a solid body composite (10, 11, 14) from one pressure input opening (8) to at least a surface of the deformation element (6), and is filled with a transmission liquid,
wherein the pressure input opening (8) is at a distance from the deformation element (6) by a distance value (d), and wherein the pressure present at the surface of the deformation element (6) differs from the pressure present at the pressure input opening by the difference of the hydrostatic pressure of the transmission liquid between the pressure input opening and the deformation element;
at least one temperature sensor;
an inclination sensor (18) designed to determine the inclination of the hydraulic path (3); and
a processing circuit (16);
**characterized in that**
the processing circuit (16) is designed to determine a current value of the density of the transmission liquid using a current temperature measured value of the one temperature sensor at least, and
to determine the difference of the hydrostatic pressure of the transmission liquid between the pressure input opening and the deformation element depending on the inclination of the hydraulic path and depending on the current value for the density of the transmission liquid and a value representing the distance value.

**2.** Pressure sensor as claimed in Claim 1, wherein the processing circuit is designed to correct the value measured by the pressure transducer by the determined difference of the hydrostatic pressure between the opening and the surface of the deformation element.

**3.** Pressure sensor as claimed in Claim 1, which has at least a second temperature sensor to measure a temperature at a second position which is at a distance from a position of the first temperature sensor, and wherein the processing circuit is designed to determine a current value for an average density of the transmission liquid using a measured value of the first temperature sensor and a temperature measured value of the second temperature sensor.

**4.** Pressure sensor as claimed in Claim 1, wherein the temperature sensor has a resistance element with a temperature-dependent resistor, and wherein the resistance element extends along the hydraulic path over at least 50%, particularly at least 75% and preferably at least 85% of the length of the hydraulic path, between the opening and the deformation element such that the resistance value of the resistance element depends on the temperature profile along the hydraulic path, wherein the processing circuit is designed to determine a current value for an average density of the transmission liquid using an output signal of the temperature sensor.

5. Pressure sensor as claimed in one of the previous claims, further comprising at least one process isolating diaphragm which is connected along its circumference in a pressure-tight manner to the surface of the solid body by forming a pressure chamber, wherein the process isolating diaphragm covers the pressure input opening.

6. Pressure sensor as claimed in one of the Claims 1 to 5, wherein the processing circuit is designed to determine - depending on a signal of at least one temperature sensor - a temperature-dependent error of the process isolating diaphragm due to the deflection of the process isolating diaphragm, wherein the error of the process isolating diaphragm describes a pressure difference between the pressure present on the exterior of the process isolating diaphragm and the pressure present in the pressure chamber.

7. Pressure sensor as claimed in one of the previous claims, wherein the inclination sensor is provided to determine the inclination as a deviation of a straight connection line between the pressure input opening and the surface of the deformation element from a vertical axis or a horizontal plane.

8. Pressure sensor as claimed in Claim 7, wherein the inclination sensor performs a two-dimensional or a three-dimensional position measurement.

9. Pressure sensor as claimed in one of the previous claims, wherein the evaluation unit saves a first inclination measured value for the inclination of the pressure sensor, compares current inclination measured values with the first measured value, and issues an alarm signal if the inclination measured value changes.

10. Pressure sensor as claimed in one of the previous claims, wherein the pressure sensor is an absolute pressure sensor or a relative pressure sensor.

11. Differential pressure sensor (31), comprising:

a pressure transducer (35) with a first surface of a pressure-sensitive deformation element (36) and a second surface of a pressure-sensitive deformation element;
a first hydraulic path (32)
wherein the first hydraulic path comprises a channel which extends through a solid body or a solid body composite from a first pressure input opening to at least the first surface, and is filled with a transmission liquid,
wherein the first pressure input opening is at a distance from the first surface of the deformation element by a first distance value,
a second hydraulic path (33)
wherein the second hydraulic path comprises a channel which extends through a solid body or a solid body composite from a second pressure input opening to at least the second surface of the deformation element, and is filled with a transmission liquid,
wherein the first pressure input opening is at a distance from the first surface by a first distance value, wherein the pressure present at the first surface deviates from the pressure present at the first pressure input opening by the difference of the hydrostatic pressure of the transmission liquid between the first pressure input opening and the first surface;
wherein the second pressure input opening is at a distance from the second surface by a second distance value, wherein the pressure present at the second surface deviates from the pressure present at the second pressure input opening by the difference of the hydrostatic pressure of the transmission liquid between the second pressure input opening and the second surface;
wherein the pressure sensor further comprises a first process isolating diaphragm (40), which is connected pressure-tight along its circumference to the surface of the solid body or solid body composite by forming a first pressure chamber, wherein the first process isolating diaphragm covers the first pressure input opening,
wherein the pressure sensor further comprises a second process isolating diaphragm (41), which is connected pressure-tight along its circumference to the surface of the solid body or solid body composite by forming a second pressure chamber, wherein the second process isolating diaphragm covers the second pressure input opening,
wherein a first temperature sensor (42) is arranged near the first process isolating diaphragm, and wherein a second temperature sensor (43) is arranged near the second process isolating diaphragm in order to measure a temperature of the first or second hydraulic path, wherein the temperature values determined can be used to determine the density of the transmission liquid in the hydraulic paths,
wherein the pressure sensor further comprises an inclination sensor to determine the inclination of the first hydraulic path and the inclination of the second hydraulic path, and a processing circuit **characterized in that** depending on the inclination of the first hydraulic path and the inclination of the second hydraulic path as a function of the value determined for the density of the transmission liquid and values representing the first distance value and the second distance value, the processing circuit is designed to determine differences of the hydrostatic pressure of the transmission liquid between the first pressure input opening and the first surface, and between the second pressure input opening and the second surface and/or a difference of the hydrostatic pressure of the transmission liquid between the first pressure input opening and the second pressure input opening.

**12.** Differential pressure sensor as claimed in Claim 11, wherein the pressure transducer has a measuring diaphragm wherein the first surface is arranged on a first side of the measuring diaphragm, and wherein the second surface is arranged on a second side of the measuring diaphragm which is located opposite the first side.

**13.** Differential pressure sensor as claimed in Claim 11, wherein the pressure transducer has a first measuring diaphragm and a second measuring diaphragm, wherein the first measuring diaphragm has the first surface and the second measuring diaphragm has the second surface, and wherein the first and second measuring diaphragm are coupled via a tappet or coupling medium such that a pressure exerted on the first surface acts against a pressure exerted on the second surface.

## Revendications

**1.** Transmetteur de pression (1), comprenant :

un chemin hydraulique (3) et un convertisseur de pression (5) avec un corps de déformation (6) sensible à la pression,
pour lequel le chemin hydraulique (3) comprend un canal, qui s'étend à travers un corps solide ou un ensemble composite de corps solides (10, 11, 14), d'une ouverture d'entrée de pression (8) au moins jusqu'à une surface du corps de déformation (6), et est rempli avec un liquide de transmission,
pour lequel l'ouverture d'entrée de pression (8) est distante du corps de déformation (6) d'une valeur de distance (d), et pour lequel la pression présente à la surface du corps de déformation (6) diffère de la pression présente à l'ouverture d'entrée de pression, de la différence de la pression hydrostatique du liquide de transmission entre l'ouverture d'entrée de pression et le corps de déformation ;
au moins un capteur de température ;
un capteur d'inclinaison (18) destiné à déterminer l'inclinaison du chemin hydraulique (3) ; et
un circuit de traitement (16) ;
**caractérisé en ce**
**que** le circuit de traitement (16) est conçu de telle sorte à déterminer, au moyen d'une valeur de température actuelle de l'au moins un capteur de température, une valeur actuelle de la densité du liquide de transmission, et en fonction de l'inclinaison du chemin hydraulique, et en fonction de la valeur actuelle de la densité du liquide de transmission et d'une valeur représentant la valeur de distance, de telle sorte à déterminer la différence de la pression hydrostatique du liquide de transmission entre l'ouverture d'entrée de pression et le corps de déformation.

**2.** Transmetteur de pression selon la revendication 1, pour lequel le circuit de traitement est conçu de telle sorte à corriger la pression mesurée par le convertisseur de pression de la différence déterminée de la pression hydrostatique entre l'ouverture et la surface du corps de déformation.

**3.** Transmetteur de pression selon la revendication 1, lequel comporte au minimum un deuxième capteur de température destiné à mesurer une température sur une deuxième position, qui est distante d'une position du premier capteur de température, et pour lequel le circuit de traitement est conçu de manière à déterminer, au moyen d'une valeur mesurée par le premier capteur de température et d'une valeur mesurée par le deuxième capteur de température une valeur actuelle correspondant à une densité moyenne du liquide de transmission.

**4.** Transmetteur de pression selon la revendication 1, pour lequel le capteur de température comporte un élément de résistance avec une résistance dépendant de la température, et pour lequel l'élément de résistance s'étend le long du chemin hydraulique sur au moins 50 %, notamment sur au moins 75 % et de préférence sur au moins 85 % de la longueur du chemin hydraulique entre l'ouverture et le corps de déformation, si bien que la valeur de résistance de l'élément de résistance dépend du profil de température le long du chemin hydraulique, le circuit de traitement étant conçu de manière à déterminer, sur la base d'un signal de sortie du capteur de température, une valeur actuelle correspondant à une densité moyenne du liquide de transmission.

5. Transmetteur de pression selon l'une des revendications précédentes, comprenant en outre au moins une membrane de séparation, laquelle est reliée le long de son pourtour, en formant une chambre de pression et de façon étanche, avec la surface du corps solide, la membrane de séparation recouvrant l'ouverture d'entrée de pression.

6. Transmetteur de pression selon l'une des revendications 1 à 5, pour lequel le circuit de traitement est conçu de telle sorte à déterminer, en fonction d'un signal d'au moins un capteur de température, une erreur de la membrane de séparation dépendant de la température due à la déviation de la membrane de séparation, l'erreur de la membrane de séparation décrivant une différence de pression entre la pression présente sur la face extérieure de la membrane de séparation et la pression régnant dans la chambre de pression.

7. Transmetteur de pression selon l'une des revendications précédentes, pour lequel le capteur d'inclinaison est prévu de telle manière à déterminer l'inclinaison en tant que déviation d'une ligne de jonction droite entre l'ouverture d'entrée de pression et la surface du corps de déformation par rapport à un axe vertical ou un plan horizontal.

8. Transmetteur de pression selon la revendication 7, pour lequel le capteur d'inclinaison effectue une mesure de position bidimensionnelle ou tridimensionnelle.

9. Transmetteur de pression selon l'une des revendications précédentes, pour lequel l'unité d'exploitation enregistre une première valeur mesurée d'inclinaison pour l'inclinaison du transmetteur de pression, compare les valeurs mesurées d'inclinaison actuelles avec la première valeur mesurée et, en cas de changements de la valeur mesurée d'inclinaison, émet un signal d'alarme.

10. Transmetteur de pression selon l'une des revendications précédentes, pour lequel le transmetteur de pression est un transmetteur de pression absolu ou un transmetteur de pression relative.

11. Transmetteur de pression différentielle (31), comprenant :

   un convertisseur de pression (35) avec une première surface d'un corps de déformation sensible à la pression et une deuxième surface d'un corps de déformation (36) sensible à la pression ;
   un premier chemin hydraulique (32)
   le premier chemin hydraulique comprenant un canal, qui s'étend à travers un corps solide ou un ensemble composite de corps solides, d'une première ouverture d'entrée de pression au moins jusqu'à la première surface et est rempli avec un liquide de transmission,
   la première ouverture d'entrée de pression étant distante de la première surface du corps de déformation d'une première valeur de distance,
   un deuxième chemin hydraulique (33)
   le deuxième chemin hydraulique comprenant un canal, qui s'étend à travers un corps solide ou un ensemble composite de corps solides, d'une deuxième ouverture d'entrée de pression au moins jusqu'à la deuxième surface et est rempli avec un liquide de transmission,
   la première ouverture d'entrée de pression étant distante de la première surface d'une première valeur de distance, la pression présente sur la première surface différant de la pression présente à la première ouverture d'entrée de pression, de la différence de la pression hydrostatique du liquide de transmission entre la première ouverture d'entrée de pression et la première surface ;
   la deuxième ouverture d'entrée de pression étant distante de la deuxième surface d'une deuxième valeur de distance, la pression présente sur la deuxième surface différant de la pression présente à la deuxième ouverture d'entrée de pression, de la différence de la pression hydrostatique du liquide de transmission entre la deuxième ouverture d'entrée de pression et la deuxième surface ;
   pour lequel le transmetteur de pression comporte en outre une première membrane de séparation (41), laquelle est reliée le long de son pourtour, en formant une première chambre de pression et de façon étanche, avec la surface du corps solide ou de l'ensemble composite de corps solides, la première membrane de séparation recouvrant la première ouverture d'entrée de pression,
   pour lequel le transmetteur de pression comporte en outre une deuxième membrane de séparation (41), laquelle est reliée le long de son pourtour, en formant une deuxième chambre de pression et de façon étanche, avec la surface du corps solide ou de l'ensemble composite de corps solides, la deuxième membrane de séparation recouvrant la deuxième ouverture d'entrée de pression,

pour lequel est disposé, à proximité de la première membrane de séparation, un premier capteur de température (42), et pour lequel est disposé, à proximité de la deuxième membrane de séparation, un deuxième capteur de température (43), afin de mesurer une température du premier ou du deuxième chemin hydraulique, les valeurs de température déterminées pouvant être utilisées pour la détermination de la densité respective du liquide de transmission dans les chemins hydrauliques,

pour lequel le transmetteur de pression comporte en outre un capteur d'inclinaison destiné à déterminer l'inclinaison du premier chemin hydraulique et l'inclinaison du deuxième chemin hydraulique et

comprend un circuit de traitement, **caractérisé en ce que**

le circuit de traitement est conçu de telle sorte à déterminer, en fonction de l'inclinaison du premier chemin hydraulique, et de l'inclinaison du deuxième chemin hydraulique, en fonction de la valeur respective déterminée pour la densité du liquide de transmission ainsi que des valeurs représentant la première valeur de distance et la deuxième valeur de distance, les différences de la pression hydrostatique du liquide de transmission entre la première ouverture d'entrée de pression et la première surface ainsi qu'entre la deuxième ouverture d'entrée de pression et la deuxième surface et/ou une différence de la pression hydrostatique du liquide de transmission entre la première ouverture d'entrée de pression et la deuxième ouverture d'entrée de pression.

12. Transmetteur de pression différentielle selon la revendication 11, pour lequel le convertisseur de pression comporte une membrane de séparation, la première surface étant disposée sur une première face de la membrane de séparation et la deuxième surface sur une deuxième face de la membrane de séparation, laquelle est disposée à l'opposé de la première face.

13. Transmetteur de pression différentielle selon la revendication 11, pour lequel le convertisseur de pression comporte une première et une deuxième membrane de séparation, pour lequel la première membrane de séparation comprend la première surface et la deuxième membrane de séparation comprend la deuxième surface, et pour lequel la première et la deuxième membrane de séparation sont couplées par l'intermédiaire d'un poussoir ou d'un moyen de couplage, de telle sorte qu'une pression exercée sur la première surface agit contre une pression exercée sur la deuxième surface.

**Fig. 1**

Fig. 2

Fig. 3

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2008042863 A1